# EUROPEAN PATENT SPECIFICATION

(11) **EP 2 137 261 B1**
(45) Date of publication and mention of the grant of the patent: **24.11.2010**
(21) Application number: 08736563.1
(22) Date of filing: 24.04.2008
(51) Int. Cl.: C08L 33/26

(54) **METHOD OF PREPARING ASPHALT**
VERFAHREN ZUR HERSTELLUNG VON ASPHALT
PROCÉDÉ DE PRÉPARATION D'ASPHALTE

(30) Priority: 26.04.2007 EP 07290532
(43) Date of publication of application: 30.12.2009
(73) Proprietor: Shell Internationale Research Maatschappij B.V., 2596 HR The Hague (NL)
(72) Inventor: GRENIER, Celine, F-76650 Petit Couronne (FR); NIGEN-CHAIDRON, Sophie, F-76650 Petit Couronne (FR)
(74) Representative: Matthezing, Robert Maarten
(86) International application number: PCT/EP2008/055036
(87) International publication number: WO 2008/132151

(56) References cited:
- GB-A- 1 087 107
- SU-A1- 1 629 311
- US-A- 3 062 829
- US-A- 4 772 647
- US-A- 5 733 955
- US-A- 6 027 557

## Description

### Field of the Invention

The invention relates to a method of preparing asphalt, comprising a step of combining a bitumen composition with aggregate.

### Background of the Invention

Bitumen is a viscous liquid or a solid consisting essentially of hydrocarbons and their derivatives. It is soluble in trichloroethylene and softens gradually when heated. Bitumen may be combined with aggregate to provide asphalt. The term "asphalt" in the present description is used to describe a mixture of bitumen and aggregate.

Bitumen can be manufactured from crude oil. The crude oil is subjected to fractional distillation, providing long residue. The long residue undergoes vacuum distillation, providing short residue. The short residue is used as feedstock in the manufacture of a variety of grades of bitumen. There are recognised standards for different grades of bitumen, specifying a number of different properties. A variety of methods are available to the skilled person to manufacture bitumen according to the various grades. The selection of the crude oil and the distillation conditions can be used to influence bitumen properties. Techniques such as the air blowing of short residue can further modify properties. Additional components can be incorporated into the bitumen to modify the properties. Typical modifying components include kerosene (producing cutback bitumen), thermoplastic polymers and rubbers, and sulphur.

Properties that are typically specified for the different grades of bitumen are penetration, softening point and viscosity. Another property that may be specified is ductility. Ductility is a measure of the cohesive strength of bitumen. Bitumen is shaped into dumb-bells, immersed in a water bath and stretched at a constant speed (of 50mm per minute in most of the existing standards) until fracture occurs. The distance the specimen is stretched before fracture is reported as the ductility. The temperature of the water in the bath typically varies between 0°C and 25°C depending on the country in which the bitumen will be used (usually 0°C in Russia, 10°C in China and 25°C in Europe) as well as on the type of bitumen (polymer modified bitumen is more ductile and is typically evaluated at temperatures between 0°C and 10°C).

Standards may specify the ductility of bitumen in the fresh state but may also specify the ductility of the bitumen after simulated aging. For example, in the Rolling Thin Film Oven Test (RTFOT), a thin film of bitumen is continuously rotated around the inner surface of a glass jar at 163°C for 75 minutes with an injection of hot air into the jar every 3 to 4 seconds. In another example, in the Thin Film Oven Test (TFOT), a thin film of bitumen is placed in a circular metallic plate that is in motion, at 120°C or 163°C for 5 hours without injection of air. The changes in bitumen properties during these tests correlate well with the changes in bitumen properties observed during the manufacture of an asphalt pavement by mixing, laying and compacting. Specifying a required ductility after short-term aging helps to ensure that the bitumen grade is suitable for manufacturing durable asphalt pavement.

GB 1 087 107 addresses the problem of improving the ductility of bitumen after aging. It demonstrates that incorporating an extract of a lubricating oil distillate into a bitumen can significantly improve the ductility of the bitumen after aging. Despite the improvement potentially offered by this method, it remains desirable to develop further means of improving the ductility of bitumen, particularly after aging. Additionally, ductility both in the fresh state and after aging can vary significantly for different samples from the same bitumen and it is desirable to develop means of improving the consistency in the measurements of ductility for a particular bitumen. If a bitumen has consistent ductility as shown by repeatable ductility measurements that meet the ductility specification, then the user can be assured of the quality of the bitumen.

The present inventors have sought to provide a method for preparing asphalt using an improved bitumen composition that has improved ductility after aging and/or has more consistent ductility measurements of the fresh bitumen and after aging.

### Summary of the Invention

Accordingly, the present invention provides a method of preparing asphalt, comprising a step of combining a bitumen composition with aggregate, wherein the bitumen composition comprises greater than 75wt% bitumen and between 0.005 and 0.5wt% polyacrylamide.

The present inventors have found that incorporating very small quantities of polyacrylamide into bitumen increases the consistency of the ductility measurements both on fresh bitumen and after aging. The bitumen composition can be used to prepare durable asphalt.

Polyacrylamide has previously been incorporated into bitumen emulsions. For example, US 4,393,155 discloses the use of polyacrylamide as a thickening agent of the aqueous phase. The polyacrylamide and an emulsifying agent are mixed with water, and subsequently mixed with bitumen. The polyacrylamide is incorporated to improve the properties of the aqueous phase, not of the bituminous phase. US 4,772,647 also discloses bitumen emulsions wherein polyacrylamide is present in the aqueous phase. It has not previously been demonstrated that incorporation of very small quantities of polyacrylamide affects the ductility of bitumen compositions and that such compositions can be advantageously combined with aggregate to prepare asphalt.

### Detailed Description of the Invention

The bitumen may be a residue from the distillation of crude oil, a cracked residue, naturally occurring bitumen or a blend of various bitumen types. Examples of bitumen that may be conveniently used in the present invention include distillation or "straight run" bitumen, precipitation bitumen, e.g. propane bitumen, oxidised or blown bitumen, naphthenic bitumen or mixtures thereof.

The quantity of bitumen in the bitumen composition is greater than 75wt%, preferably greater than 85wt%, more preferably greater than 90wt%, even more preferably greater than 95wt% and most preferably greater than 98wt%. Bitumen is typically the least expensive component in the composition so it is desirable to maximise the quantity of bitumen. The bitumen composition used in the method of the invention is desirably not a bitumen emulsion and preferably contains less than 5wt% water, preferably less than 1wt% water and most preferably does not contain water.

The quantity of polyacrylamide in the bitumen composition is from 0.005 to 0.5wt% polyacrylamide. Less than 0.005wt% polyacrylamide may not have a sufficient effect on the ductility of the bitumen composition and it may be difficult to homogeneously incorporate less than 0.005wt% polyacrylamide. Greater than 0.5wt% polyacrylamide is not preferred because the polymer is more expensive than bitumen and increasing the quantity of polyacrylamide above 0.5wt% may not produce further improvement in ductility. The quantity of polyacrylamide is preferably from 0.01 to 0.3wt%. The polyacrylamide preferably has a molecular weight of between 1000 and 22,000,000. Polyacrylamide is commercially available and may be purchased as granules or powder.

In one embodiment of the method of the invention the bitumen composition preferably comprises from 0.1-24.995wt% of an oil having a viscosity from 0.1 to 50 mm²/s, preferably from 1 to 30 mm²/s. Low viscosity oils are routinely incorporated into bitumens to alter their properties, e.g. to increase penetration. In the present invention, the skilled person may select a bitumen that has been modified with a low viscosity oil, and may add polyacrylamide to improve the ductility of the bitumen. However, in a preferred embodiment of the invention the skilled person may select a bitumen that may or may not have been modified with a low viscosity oil, and will add polyacrylamide and low viscosity oil in order to improve the ductility. Less than 0.1wt% of oil is unlikely to alter the properties of the bitumen composition. More than 24.995wt% of oil is likely to increase considerably the penetration of the bitumen composition and this is undesirable. Most preferably the amount of low viscosity oil is from 0.3wt% to 8wt%.

The low viscosity oil is preferably miscible in bitumen or, at least, must lead to a blend which is storage stable. The low viscosity oil should not detrimentally affect the properties of the bitumen, or at least must not affect the performances of the asphalt.

The low viscosity oil may be derived from petroleum, whether from direct distillation, or from another process including extraction using a solvent. Examples of petroleum-derived oils are Bright Furfuryl alcohol Extract (BFE), DACO and D3 (heaviest distillate after vacuum distillation). The low viscosity oil could also be a low viscosity silicone oil or mineral oil. In a preferred embodiment of the invention, the low viscosity oil is a plant-derived oil such as palm oil, high erucic rapeseed oil, low erucic rapeseed oil or pine oil. In a most preferred embodiment of the method of the invention, the bitumen composition comprises 0.1-5wt% of a plant-derived oil. The present inventors have found that incorporating polyacrylamide and the low viscosity oil into bitumen improves the ductility after aging and increases the consistency of the ductility measurements after aging. This improvement is greater than the improvement observed by incorporating polyacrylamide or the low viscosity oil alone.

The bitumen composition may comprise a polymer in addition to the polyacrylamide. Preferred polymers are thermoplastic elastomers or plastomers, for example styrenic block copolymers, olefinic copolymers, polyurethane and polyether-polyester copolymers. The styrenic block copolymers are most preferred and examples include styrene-butadiene-styrene (SBS) and styreneisoprene-styrene (SIS). The amount of additional polymer in the bitumen composition is preferably from 3 to 15wt%.

The bitumen composition may comprise further additives, e.g. softening agents such as wax or penetration index boosters such as waxes, polyphosphoric acid and ethylene polymers.

Asphalts are essentially mixtures of bitumen, as binder, with aggregate, in particular filler, sand and stones. There are many different types of asphalts available and their characteristics can vary quite significantly. The design of asphalts for bituminous paving application is largely a matter of selecting and proportioning materials to obtain the desired properties in the finished construction.

Asphalts are often designed as either gap graded or continuously graded. This refers to the constitution of the asphalts in terms of the individual aggregate fractions within mixtures. Size is measured by passing a sample of aggregate through a series of sieves. The fractions are usually divided in filler (size smaller than 63µm or 75µm), sand (size up to 2mm) and stones fractions (e.g. 2 to 4mm, 4 to 6mm, 6 to 8mm, 8 to 11mm, 11 to 14mm). A continuously graded asphalt is one that contains fractions of various sizes throughout the range. A gap graded asphalt is one where sizes are discontinuous.

Continuously graded asphalts (often called "dense" asphalts) usually have an air voids content of 1 to 7%, in particular 4 to 5%. Gap graded asphalts may have higher air voids content. They may be "open" asphalts with a voids content of about 7 to 12%, or "very open" asphalts with a still higher air voids content of 12 to 30%, preferably 22 to 24%.

It will be understood by those skilled in the art that a wide range of aggregate types and size distributions may be employed in the method of the present invention, the type and mix of aggregate varying with the application for which the asphalt is to be used.

Preferably stones comprise at least 10% of the aggregate, more preferably at least 15% and most preferably at least 20%. Preferably stones comprise up to 70% of the aggregate, more preferably up to 65%, most preferably up to 60%. Filler and/or sand constitutes the balance.

The amount of the bitumen composition combined with aggregate to prepare asphalt in the method of the present invention will vary depending on the application for which the asphalt is to be used. However, the asphalt prepared by the method of the present invention preferably comprises in the range of from 1 to 20% wt of the bitumen composition, more preferably in the range of from 2 to 10% wt, and most preferably in the range from 3 to 7% wt, based on total weight of asphalt.

It is believed that the present invention is of benefit in relation to all types of asphalt, whatever the "mix design" and whatever the voids content, i.e. to "dense", "open" and "very open" asphalts.
The present invention further provides an asphalt prepared according to the method of the present invention and yet further provides a method of preparing an asphalt pavement comprising laying asphalt prepared by a method according to the invention. Because the bitumen has superior ductility after aging, the pavement is likely to have superior durability.

To prepare the bitumen composition to be used in the method of the invention the bitumen is typically heated to a temperature at which it is sufficiently fluid to be mixed. Typically a bitumen would be heated to at least 130°C and a polymer-modified bitumen would be heated to at least 160°C. Polyacrylamide, preferably in the form of granules or powder, is added to the heated bitumen and blended. The inventors have found that it is not necessary for the bitumen composition to undergo a maturation period; the bitumen composition is suitable for use directly after blending of the bitumen and polyacrylamide.

Low viscosity oil can be blended with the bitumen before or after the bitumen is blended with the polyacrylamide.

Polymers such as thermoplastic elastomers or plastomers are incorporated into the bitumen compositions using known techniques. To maximise the durability of a polymer-modified bitumen, elastomers such as styrenic block copolymers are preferably blended with the bitumen using low shear mixing.

The present inventors have observed that the bitumen compositions prepared as described appear to be stable and no special storage is required.

The bitumen compositions can be combined with aggregate in conventional mix processes to form asphalt. The asphalt can be used to form asphalt pavement in conventional pavement-laying processes. The asphalt may also be used in other processes such as waterproofing, roofing and pipe coating.

### Examples

The invention will now be described by reference to examples which are not intended to be limiting of the invention. Bitumen compositions that are suitable for use in the method of the present invention were prepared.

Three different bitumens were used. Polymers and low viscosity oils were incorporated into the bitumen using a low shear mixer. The polymers were polyacrylamide (5,000,000 molecular weight, leading to a viscosity of about 280 centiPoise at 25°C when 5% is dissolved in water, purchased from VWR) and polyethyleneoxide. The low viscosity oils were D3 (obtained from crude oil distillation) and refined, bleached, deodorised (RBD) palm oil. The bitumen was heated at 160°C, and when this temperature was reached, the low viscosity fluid and/or the polymer were added. The product was mixed for 1 hour at 160°C.

The penetration of the bitumen compositions was measured according to EN 1426, the ring and ball softening point of the bitumen was measured according to EN 1427 and the ductility of the bitumen was measured according to ASTM D113-99 at 10°C. The ductility of two or three samples of each bitumen was measured and the results were averaged to give a final value.

Samples of each of the bitumen compositions were aged using the Rolling Thin Film Oven Test (RTFOT) according to EN 12607-1.

The compositions of the examples and comparative examples are given in Table 1:

**Table 1**

| | Bitumen | Polymer | Flux |
|---|---|---|---|
| Comparative Example 1 | Type I | None | None |
| Example 1 | Type I | 0.1% polyacrylamide | None |
| Example 2 | Type I | 0.01% polyacrylamide | None |
| Comparative Example 2 | Type I | None | 2% D3 |
| Example 3 | Type I | 0.1% polyacrylamide | 1.9% D3 |
| Comparative Example 3 | Type II | None | None |
| Comparative Example 4 | Type II | None | 0.1% RBD Palm Oil |
| Comparative Example 5 | Type II | None | 0.3% RBD Palm Oil |
| Comparative Exaple 6 | Type II | None | 0.7% RBD Palm Oil |
| Comparative Example 7 | Type II | None | 1% RBD Palm Oil |
| Example 4 | Type II | 0.01% polyacrylamide | 1% RBD Palm Oil |
| Comparative Example 8 | Type III | None | None |
| Example 5 | Type III | 0.1% polyacrylamide | None |
| Comparative Example 9 | Type III | 0.1% polyethylene oxide | None |

The penetration, softening point and ductility results before and after RFTOT aging are given in table II. The variation is the highest ductility result (from the two or three results) minus the lowest ductility result.

**Table II**

| | | Penetration at 25°C (dmm) | Softening point (°C) | Ductility at 10°C (cm) | | | | |
|---|---|---|---|---|---|---|---|---|
| | | | | Sample 1 | Sample 2 | Sample 3 | Average | Variation |
| Comparative Example 1 | Fresh | 72 | 44.8 | 56.70 | 37.70 | 48.70 | 47.7 | 19.00 |
| | RTFOT | 47 | 50.6 | 7.30 | 6.80 | x | 7.1 | 0.50 |
| Example 1 | Fresh | 62 | 44.4 | 39.59 | 32.60 | 33.46 | 35.2 | 6.99 |
| | RTFOT | 47 | 51.4 | 7.20 | 7.20 | 7.20 | 7.2 | 0 |
| Example 2 | Fresh | 68 | 46.8 | 31.20 | 33.40 | 33.90 | 32.8 | 2.70 |
| | RTFOT | 46 | 51.2 | 8.00 | 8.00 | x | 8.0 | 0 |
| Comparative Example 2 | Fresh | 86 | 44.4 | >130 | >130 | >130 | >130 | x |
| | RTFOT | 55 | 49.6 | 8.40 | 8.40 | 9.90 | 8.9 | 1.50 |
| Example 3 | Fresh | 83 | 43.6 | 137.10 | 147.80 | >150 | > 130 | x |
| | RTFOT | 56 | 48.2 | 11.50 | 11.80 | 12.80 | 12.0 | 1.00 |
| Comparative Example 3 | Fresh | 59 | 47.4 | 21.70 | 21.70 | 21.70 | 21.70 | 0 |
| | RTFOT | 41 | 52.2 | 5.50 | 5.60 | 6.10 | 5.7 | 0.60 |
| Comparative Example 4 | Fresh | 58 | 48.8 | 13.60 | 15.60 | 17.30 | 15.5 | 3.70 |
| | RTFOT | 40 | 50.6 | 5.70 | rupture | rupture | 5.7 | x |
| Comparative Example 5 | Fresh | 60 | 48.0 | 16.70 | 24.80 | 24.80 | 24.8 | 8.10 |
| | RTFOT | 44 | 52.6 | 5.90 | 6.00 | 6.00 | 6.0 | 0.10 |
| Comparative Example 6 | Fresh | 65 | 46.6 | 54.00 | 56.00 | 61.00 | 57.0 | 5.00 |
| | RTFOT | x | x | 9.30 | 9.40 | x | 9.4 | 0.10 |
| Comparative Example 7 | Fresh | 67 | 45.4 | 51.00 | 74.00 | 89.00 | 71.3 | 38.00 |
| | RTFOT | 48 | 50.4 | 7.70 | 7.70 | 7.70 | 7.7 | 0 |
| Example 4 | Fresh | 65 | 46.0 | 95.00 | 96.00 | x | 95.5 | 1.00 |
| | RTFOT | 48 | 49.6 | 7.90 | 7.90 | x | 7.9 | 0 |
| Comparative Example 8 | Fresh | 64 | 47.8 | 15.66 | 16.00 | 12.45 | 14.70 | 3.55 |
| | RTFOT | 38 | 55.2 | 5.50 | 5.40 | 2.35 | 5.45 | 3.15 |
| Example 5 | Fresh | 66 | 49.2 | 11.76 | 11.37 | X | 11.57 | 0.39 |
| | RTFOT | 39 | 55.6 | 4.40 | 4.40 | 4.40 | 4.40 | 0 |
| Comparative Example 9 | Fresh | 60 | 48.2 | 8.40 | 8.99 | 9.00 | 8.80 | 0.60 |
| | RTFOT | 43 | 55.5 | 2.80 | 3.76 | 3.76 | 3.44 | 2.96 |

For most of the grades considered here, ductilities targeted were of 25cm on the fresh bitumen composition and 6cm after short-term ageing.

From Example 1 and Comparative Example 1 it can be seen that incorporating 0.1% polyacrylamide into the bitumen leads to lower ductility for the fresh bitumen but ductility of a similar magnitude for the aged bitumen. However the aged ductility measurements are more repeatable, which illustrates the improved consistency of the binder. Incorporating 0.01% polyacrylamide into the bitumen (example 2) slightly improves the magnitude of the ductility of the aged bitumen and again gives repeatable results.

Adding D3 to the bitumen improves the ductility of the both the fresh and aged bitumen (compare comparative example 2 with comparative example 1). Adding D3 and 0.1% polyacrylamide to the bitumen provides a further improvement to the ductility of the aged bitumen (see example 3), greater than that achieved by adding just polyacrylamide (example 1) or adding just D3 (comparative example 2).

Similarly, adding palm oil to the bitumen at 0.3wt% or above improves the ductility of the both the fresh and aged bitumen (compare comparative examples 3 to 7). Adding palm oil and 0.01% polyacrylamide to the bitumen provides a further improvement to the ductility of the aged bitumen (see example 4).

Adding 0.1% polyacrylamide to the bitumen of Type III leads to slightly lower ductility for the aged bitumen, but very repeatable results (compare comparative example 8 and example 5). By contrast, adding 0.1% of another polymer, polyethylene oxide, leads to lower ductility values and more variable ductility values when measured at 10°C (see comparative example 9).

The improvement in ductility and/or improvement in the consistency of ductility measurements shown by the examples has been achieved without significant change in the penetration or softening point of the bitumen. The changes in penetration are 15dmm or less and the change in softening point is 3°C or less.

## Claims

1. A method of preparing asphalt, comprising a step of combining a bitumen composition with aggregate, wherein the bitumen composition comprises greater than 75wt% bitumen and between 0.005 and 0.5wt% polyacrylamide.

2. A method according to claim 1, wherein the bitumen composition comprises greater than 85wt% bitumen.

3. A method according to claim 1 or claim 2, wherein the bitumen composition comprises less than 1wt% water.

4. A method according to any preceding claim, wherein the bitumen composition comprises from 0.1-24.995wt% of an oil having a viscosity from 0.1 to 50 mm²/s.

5. A method according to claim 4, wherein the bitumen composition comprises 0.1-5wt% of a plant-derived oil having a viscosity from 0.1 to 50 mm²/s.

6. A method according to any preceding claim, wherein the bitumen composition comprises 3 to 15wt% of a thermoplastic elastomer or plastomer selected from styrenic block copolymers, olefinic copolymers, polyurethane and polyether-polyester copolymers.

7. A method according to any preceding claim, wherein the amount of the bitumen composition is 2 to 10% wt based upon the weight of the asphalt.

8. A method of preparing an asphalt pavement comprising laying asphalt prepared by a method according to any one of claims 1 to 7.

## Patentansprüche

1. Verfahren zur Herstellung von Asphalt, welches den Schritt des Vereinigens einer Bitumenzusaniniensetzung mit einem Zuschlag umfasst, wobei die Bitumenzusammensetzung mehr als 75 Gew.-% Bitumen und 0,005 bis 0,5 Gew.-% Polyacrylamid umfasst.

2. Verfahren nach Anspruch 1, wobei die Bitumenzusammensetzung mehr als 85 Gew.-% Bitumen umfasst.

3. Verfahren nach Anspruch 1 oder Anspruch 2, wobei die Bitumenzusammensetzung weniger als 1 Gew.-% Wasser umfasst.

4. Verfahren nach einem der vorhergehenden Ansprüche, wobei die Bitumenzusammensetzung 0,1 bis 24,995 Gew.-% eines Öls umfasst, welches eine Viskosität von 0,1 bis 50 mm²/s aufweist.

5. Verfahren nach Anspruch 4, wobei die Bitumenzusammensetzung 0,1 bis 5 Ges.-% eines Öls pflanzliche Ursprungs umfasst, welches eine Viskosität von 0,1 bis 50 mm²/s aufweist.

6. Verfahren nach einem der vorhergehenden Ansprüche, wobei die Bitumenzusammensetzung 3 bis 15 Gew.-% eines thermoplastischen Elastomers oder Plastomers umfasst, das aus Vinylaromaten-Blockcopolymeren, olefinischen Copolymeren, Polyurethan und Polyether/Polyester-Copolymeren ausgewählt ist.

7. Verfahren nach einem der vorhergehenden Ansprüche, wobei die Menge der Bitumenzusammensetzung 2 bis 10 Ges.-% beträgt, bezogen auf das Gewicht des Asphalts.

8. Verfahren zur Herstellung eines Asphaltbelags, welches das Legen eines Asphalts umfasst, der nach einem der Ansprüche 1 bis 7 hergestellt wurde.

## Revendications

1. Méthode de préparation d'asphalte, comprenant une étape combinant une composition de bitume avec agrégat, dans laquelle la composition de bitume comprend plus de 75% en poids de bitume et entre 0,005 et 0,5% en poids de polyacrylamide.

2. Méthode selon la revendication 1, dans laquelle la composition de bitume comprend plus de 85% en poids de bitume.

3. Méthode selon la revendication 1 ou la revendication 2, dans laquelle la composition de bitume comprend moins de 1% d'eau.

4. Méthode selon l'une quelconque des revendications qui précèdent, dans laquelle la composition de bitume comprend entre 0,1 et 24,995% en poids d'unie huile présentant une viscosité comprise entre 0,1 et 50 mm²/s.

5. Méthode selon la revendication il, dans laquelle la composition de bitume comprend 0,1 à 5% en poids d'une huile d'origine végétale présentant une viscosité comprise entre 0,1 et 50 mm²/s.

6. Méthode selon l'une quelconque des revendications qui précèdent, dans laquelle la composition de bitume comprend 3 à 15% en poids d'un élastomère ou plastomère thermoplastique sélectionné à partie de copolymères en bloc contenant du styrène et de copolymères contenant de l'oléfine, de copolymères de polyuréthane et de polyester-polyester.

7. Méthode selon l'une des revendications qui précèdent, dans laquelle la quantité de la composition de bitume est de 2 à 10% en poids sur la base du poids de l'asphalte.

8. Méthode de préparation d'un revêtement en asphalte comprenant l'application de l'asphalte préparé par une méthode selon l'une quelconque des revendications 1 à 7.
